# EUROPEAN PATENT APPLICATION

(11) **EP 4 761 434 A1**
(43) Date of publication of application: **17.06.2026**
(21) Application number: 24853691.4
(22) Date of filing: 09.08.2024
(51) Int. Cl.: H04W 72/232

(54) **SL PRS RESOURCE DETERMINATION METHOD AND APPARATUS, SL PRS RESOURCE INDICATION METHOD AND APPARATUS, AND STORAGE MEDIUM**

(30) Priority: 11.08.2023 CN 202311014128
(71) Applicant: Datang Mobile Communications Equipment Co., Ltd., Beijing 100085 (CN)
(72) Inventor: LI, Hui, Beijing 100085 (CN); REN, Xiaotao, Beijing 100085 (CN); REN, Bin, Beijing 100085 (CN); DA, Ren, Beijing 100085 (CN)
(74) Representative: Studio Torta S.p.A.
(86) International application number: PCT/CN2024/111003
(87) International publication number: WO 2025/036282

(57) **Abstract**

A method for determining sidelink positioning reference signal (SL PRS) resource, a method for indicating SL PRS resource, an apparatus, and a storage medium are provided. The method for determining SL PRS resource includes: receiving downlink control information (DCI) sent by a network device; and determining, based on the DCI, an SL PRS resource allocated by the network device to the terminal.

## Description

### CROSS-REFERENCE TO RELATED APPLICATION

This application claims priority to Chinese Patent Application No. 202311014128.9 filed on August 11, 2023, entitled "METHOD FOR DETERMINING SL PRS RESOURCE, METHOD FOR INDICATING SL PRS RESOURCE, APPARATUS, AND STORAGE MEDIUM", which is incorporated herein by reference in its entirety.

### TECHNICAL FIELD

The present disclosure relates to the field of wireless communication technologies, and more particularly to a method for determining sidelink positioning reference signal (SL PRS) resource, a method for indicating SL PRS resource, an apparatus, and a storage medium.

### BACKGROUND

To support positioning in a sidelink (SL) system, a reference signal for positioning, which is defined as a sidelink positioning reference signal (SL PRS), needs to be introduced. With the introduction of the SL PRS, for an in-coverage scenario, the network needs to further indicate the allocation of SL PRS resource so that a terminal determines the SL PRS resource to be used. However, there is currently no specific technical solution for this.

### SUMMARY

The present disclosure provides a method for determining sidelink positioning reference signal (SL PRS) resource, a method for indicating SL PRS resource, an apparatus, and a storage medium.

In a first aspect, the present disclosure provides a sidelink positioning reference signal SL PRS resource determination method, applied to a terminal, including: receiving downlink control information (DCI) sent by a network device; and determining, based on the DCI, an SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a radio network temporary identifier for sidelink positioning (SL-Pos-RNTI).

In some embodiments, when a CRC of the first DCI is scrambled by a SL-Pos-RNTI, the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a CRC of the second DCI is scrambled by a radio network temporary identifier for the dedicated resource pool and sidelink positioning (SL-Pos-DP-RNTI).

In a second aspect, the present disclosure further provides a sidelink positioning reference signal SL PRS resource indication method, applied to a network device, including: sending downlink control information (DCI) to a terminal, where the DCI is used to indicate an SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a radio network temporary identifier for sidelink positioning (SL-Pos-RNTI).

In some embodiments, a CRC of the first DCI is scrambled by a SL-Pos-RNTI, the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a CRC of the second DCI is scrambled by a radio network temporary identifier for the dedicated resource pool and sidelink positioning (SL-Pos-DP-RNTI).

In a third aspect, the present disclosure further provides a terminal, including: a memory, a transceiver and a processor. The memory is configured to store a computer program. The transceiver is configured to transmit and receive data under the control of the processor. The processor is configured to read the computer program in the memory to perform the following operations: receiving DCI sent by a network device; and determining, based on the DCI, a sidelink positioning reference signal SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a SL-Pos-RNTI.

In some embodiments, when a CRC of the first DCI is scrambled by a SL-Pos-RNTI, the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a CRC of the second DCI is scrambled by a radio network temporary identifier for the dedicated resource pool and sidelink positioning (SL-Pos-DP-RNTI).

In a fourth aspect, the present disclosure further provides a network device, including: a memory, a transceiver and a processor. The memory is configured to store a computer program. The transceiver is configured to transmit and receive data under the control of the processor. The processor is configured to read the computer program in the memory to perform the following operations: sending downlink control information (DCI) to a terminal, where the DCI is used to indicate a sidelink positioning reference signal SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a radio network temporary identifier for sidelink positioning (SL-Pos-RNTI).

In some embodiments, when a CRC of the first DCI is scrambled by a SL-Pos-RNTI, the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a CRC of the second DCI is scrambled by a radio network temporary identifier for the dedicated resource pool and sidelink positioning (SL-Pos-DP-RNTI).

In a fifth aspect, the present disclosure further provides a sidelink positioning reference signal SL PRS resource determination apparatus, including: a receiving unit, configured to receive downlink control information (DCI) sent by a network device; and a determining unit, configured to determine, based on the DCI, an SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a (SL-Pos-RNTI.

In some embodiments, when a CRC of the first DCI is scrambled by a SL-Pos-RNTI, the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a CRC of the second DCI is scrambled by a radio network temporary identifier for the dedicated resource pool and sidelink positioning (SL-Pos-DP-RNTI).

In a sixth aspect, the present disclosure further provides a sidelink positioning reference signal SL PRS resource indication apparatus, including: a sending unit, configured to transmit downlink control information (DCI) to a terminal, where the DCI is used to indicate an SL PRS resource allocated by the network device to the terminal.

In some embodiments, the DCI includes one or more of the following: first DCI, used to indicate an SL PRS resource in a shared resource pool; or second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a CRC of the first DCI is scrambled by a SL-Pos-RNTI.

In some embodiments, when a CRC of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or, a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

In a seventh aspect, the present disclosure further provides a non-transitory readable storage medium, the non-transitory readable storage medium stores a computer program, and the computer program is configured to cause a processor to perform the SL PRS resource determination method in the above-mentioned first aspect, or perform the SL PRS resource indication method in the above-mentioned second aspect.

In an eighth aspect, the present disclosure further provides a communication device, in which a computer program is stored, and the computer program is configured to cause the communication device to execute the SL PRS resource determination method in the above-mentioned first aspect, or execute the SL PRS resource indication method in the above-mentioned second aspect.

In a ninth aspect, the present disclosure further provides a processor-readable storage medium, on which a computer program is stored, and the computer program is configured to cause a processor to execute the SL PRS resource determination method in the above-mentioned first aspect, or execute the SL PRS resource indication method in the above-mentioned second aspect.

In a tenth aspect, the present disclosure further provides a chip product, in which a computer program is stored, and the computer program is configured to cause the chip product to execute the SL PRS resource determination method in the above-mentioned first aspect, or execute the SL PRS resource indication method in the above-mentioned second aspect.

According to the method for determining SL PRS resource, the method for indicating SL PRS resource, the apparatus, and the storage medium of the present disclosure, the network device can indicate the allocated SL PRS resource to the terminal through DCI, so that the terminal can determine the allocation of SL PRS resource accordingly, thereby completing sidelink positioning.

### BRIEF DESCRIPTION OF THE DRAWINGS

In order to illustrate the technical solutions of the embodiments of the present disclosure in a clearer manner, the drawings required for the description of the embodiments or the related technologies will be described hereinafter briefly. Apparently, the following drawings merely relate to some embodiments of the present disclosure, and based on these drawings, a person of ordinary skill in the art may obtain other drawings without any creative effort.
FIG. 1 is a flow chart of a method for determining SL PRS resource according to the embodiments of the present disclosure;
FIG. 2 is a flow chart of a method for indicating SL PRS resource according to the embodiments of the present disclosure;
FIG. 3 is a diagram showing an example of resource indication according to the embodiments of the present disclosure;
FIG. 4 is a schematic structural diagram of a terminal according to the embodiments of the present disclosure;
FIG. 5 is a schematic structural diagram of a network device according to the embodiments of the present disclosure;
FIG. 6 is a schematic structural diagram of an apparatus for determining SL PRS resource according to the embodiments of the present disclosure; and
FIG. 7 is a schematic structural diagram of an apparatus for indicating SL PRS resource according to the embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that the associated objects before and after the character is in an "or" relationship.

The term "multiple" in the embodiments of the present disclosure refers to two or more than two, the similar applies to other quantifiers.

Terms such as "first" and "second" in the embodiments of the present disclosure are used to distinguish similar objects and are not used to describe a specific order or sequence. It should be appreciated that the terms used in this way may be interchanged under appropriate circumstances, so that the embodiments of the present disclosure described herein may be implemented in a sequence other than those illustrated or described herein. Moreover, the objects distinguished by "first" and "second" are generally of the same type, and the quantity of objects is not particularly defined herein. For example, there may be one or more first objects.

The technical solutions in the embodiments of the present disclosure will be described hereinafter in a clear and thorough manner with reference to the drawings of the embodiments of the present disclosure. Apparently, the following embodiments merely relate to a part of, rather than all of, the embodiments of the present disclosure. All other embodiments obtained by a person ordinary skilled in the art based on the embodiments of the present disclosure without any creative efforts fall within the scope of the present disclosure.

Currently, for a sidelink system in a scenario within network coverage, a base station indicates an SL resource for data transmission to a terminal through downlink control information (Downlink Control Information, DCI) format 3_0 signaling, and the terminal uses this SL resource to communicate with another terminal. The information fields included in DCI format 3_0 are as shown in Table 1, including: a resource pool index field, a time interval field, a time domain resource allocation field, a frequency domain subchannel indication field, a frequency domain resource allocation field, a physical uplink control channel (Physical Uplink Control Channel, PUCCH) resource indication field, a slot interval field between physical sidelink feedback channel (Physical Sidelink Feedback Channel, PSFCH) and PUCCH, a hybrid automatic repeat request (HARQ) process number field, a new data indication field, a configuration index field, and a cumulative sidelink grant index field.

After the introduction of SL PRS, a network side needs to further indicate the allocation of SL PRS resource. The allocation of SL PRS resource may be inconsistent with the allocation of SL communication resource. Therefore, relevant SL resource indication scheme cannot effectively distinguish the allocation of data resource from the allocation of SL PRS resource, and even cannot provide indication when the quantity of data transmission and the quantity of SL PRS transmission is inconsistent.

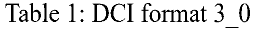

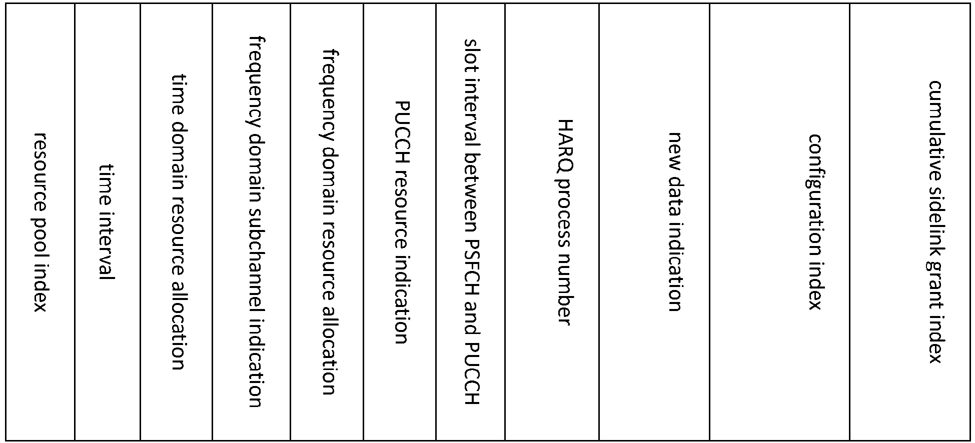

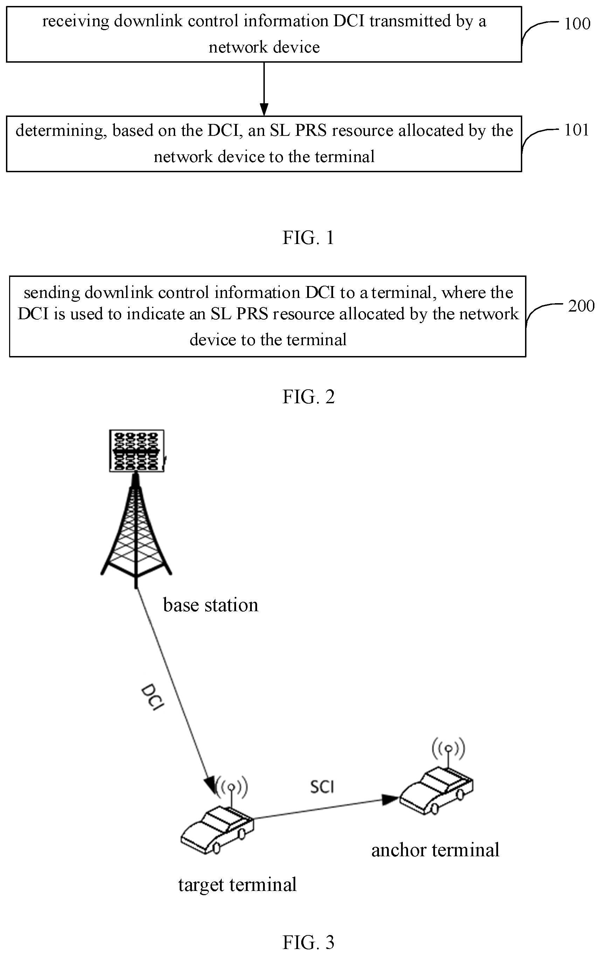

FIG. 1 is a flow chart of a method for determining SL PRS resource according to the embodiments of the present disclosure. The method may be applied to a terminal. As shown in FIG. 1, the method includes the following steps.

Step 100, receiving downlink control information (DCI) sent by a network device.

Step 101, determining, based on the DCI, an SL PRS resource allocated by the network device to the terminal.

In specific, the present disclosure proposes a solution to the problem of indicating the allocation of SL PRS resource. A network device (e.g., a base station) may transmit DCI to the terminal, and use the DCI to indicate the allocation of SL PRS resource.

In some embodiments, the DCI may simultaneously indicate the allocation of a physical sidelink shared channel (PSSCH) (or referred to as SL PSSCH) resource and allocation of SL PRS resource.

In some embodiments, the DCI includes one or more of the following:
first DCI, used to indicate an SL PRS resource in a shared resource pool; or
second DCI, used to indicate an SL PRS resource in a dedicated resource pool.

In specific, the DCI in the embodiments of the present disclosure may be used for a shared resource pool and/or a dedicated resource pool. The dedicated resource pool and the shared resource pool are two types of resource pools that may be used for SL-PRS transmission. In the present disclosure, the dedicated resource pool refers to a resource pool dedicated to SL PRS transmission, and the shared resource pool refers to a resource pool shared between SL PRS transmission and SL data transmission. The dedicated resource pool includes the SL-PRS resource and a control channel resource. The dedicated resource pool is only used to transmit SL-PRS and its associated control channel/information (such as a physical sidelink control channel (PSCCH) or sidelink control information (SCI)). The shared resource pool includes a SL-PRS resource, a data transmission resource, and associated control channels/information. The shared resource pool may be used to transmit both SL-PRS and SL data, such as PSSCH or PSFCH.

The first DCI may be an existing DCI format 3_0, or DCI designed based on DCI format 3_0, which is used to indicate the SL PRS resource in the shared resource pool.

The second DCI may be DCI different from the existing DCI format 3_0, and is used to indicate the SL PRS resource in the dedicated resource pool.

In some embodiments, the network device may indicate the SL PRS resource by using different Radio Network Temporary Identifiers (RNTIs) to scramble the cyclic redundancy check (CRC) of the DCI, using a value of a bit in a specific information field in the DCI to indicate the SL PRS resource, introducing an SL PRS indication field in the DCI, using a dedicated DCI, or using a combination of the above-referenced manners. Accordingly, the terminal may determine the SL PRS resource based on the RNTI used to scramble the CRC, the value of the bit in the specific information field in the DCI, the SL PRS indication field, the dedicated DCI, or the combination of the above-referenced manners.

In the SL PRS resource determination method of the embodiments of the present disclosure, the network device can indicate the allocated SL PRS resource to the terminal through DCI, so that the terminal can determine the allocation of SL PRS resource accordingly, thereby completing sidelink positioning.

In some embodiments, the first DCI includes a first information field, and the first information field is used to indicate whether there is an SL PRS resource in a slot where at least one PSSCH transmission is located.

Specifically, the first information field is not particularly defined herein, and it may be one or some specific information fields in the DCI. The network device may use the first information field to indicate whether there is an SL PRS resource in a slot where at least one PSSCH transmission is located, so that the terminal may determine the allocation of SL PRS resource through the first information field.

In some embodiments, the quantity of PSSCH transmissions may be determined by the time domain resource allocation field in the DCI.

When there is an SL PRS resource in a slot where one PSSCH transmission is located, it may be understood as one transmission (sidelink transmission) that includes data transmission and SL PRS transmission. When there does not exist an SL PRS resource in the slot where one PSSCH transmission is located, it may be understood as one transmission (sidelink transmission) that includes only data transmission, and does not include SL PRS transmission.

In some embodiments, it is assumed that the quantity of PSSCH transmission is n, n bits in the first information field may respectively indicate whether there is an SL PRS resource in the slot where each PSSCH transmission is located. The quantity of bits in the first information field may be greater than or equal to n.

In some embodiments, the first information field includes a configuration index field and/or a HARQ process number field.

In some embodiments, 3 bits in the configuration index field are used to respectively indicate whether there is an SL PRS resource in the slot where each of up to 3 PSSCH transmissions is located.

For example, the configuration index field includes 3 bits, each bit indicates whether its corresponding one of up to 3 PSSCH transmissions includes SL PRS transmission. The quantity of transmissions may be determined by the time domain resource allocation field in the DCI. It is assumed that the time domain resource allocation field in the DCI indicates 3 transmissions, and the configuration index field indicates "010", it means that the first and third transmissions include only data transmission, and the second transmission includes both data transmission and SL PRS transmission. In a case that the time domain resource allocation field in the DCI indicates 2 transmissions, 2 bits specified in the configuration index field, for example, only the first 2 bits, may be valid. At this point, when the configuration index field indicates "101", it means that the first transmission includes both data transmission and SL PRS transmission, and the second transmission includes only data transmission.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

For example, the HARQ process number field occupies 4 bits. The first bit may be used to indicate activating a configured grant, and each of the latter 3 bits indicates whether its corresponding one of up to 3 PSSCH transmissions includes SL PRS, as shown in Table 2.

**Table 2 HARQ process number field indication example**

| Value of HARQ process number field | Interpretation |
|---|---|
| 0000 | activating a configured grant, and each transmission including only data transmission (e.g., only PSSCH resource) |
| 0001 | activating a configured grant, the first and second transmissions including only data transmission (e.g., only PSSCH resource), and the third transmission including both data transmission and SL PRS transmission (e.g., both PSSCH resource and SL PRS resource) |
| 0010 | activating a configured grant, the first and third transmissions including only data transmission (e.g., only PSSCH resource), and the second transmission including both data transmission and SL PRS transmission (e.g., both PSSCH resource and SL PRS resource) |
| 0011 | activating a configured grant, the first transmission including only data transmission (e.g., only PSSCH resource), and the second and third transmissions each including both data transmission and SL PRS transmission (e.g., both PSSCH resource and SL PRS resource) |
| 0100 | activating a configured grant, the second and third transmissions each including only data transmission (e.g., only PSSCH resource), and the first transmission including both data transmission and SL PRS transmission (e.g., both PSSCH resource and SL PRS resource) |
| 0101 | activating a configured grant, the second transmission including only data transmission (e.g., only PSSCH resource), and the first and third transmissions each including both data transmission and SL PRS |
| | transmission (e.g., both PSSCH resource and SL PRS resource) |
| 0110 | activating a configured grant, the third transmission including only data transmission (e.g., only PSSCH resource), and the first and second transmissions each including both data transmission and SL PRS transmission (e.g., both PSSCH resource and SL PRS resource) |
| 0111 | activating a configured grant, and the first, second, and third transmissions each including both data transmission and SL PRS transmission (e.g., both PSSCH resource and SL PRS resource) |

It should be noted that the above are for illustrative purposes only; other bit value combinations may be used to indicate the corresponding transmission configurations.

In some embodiments, a CRC of the first DCI may be scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI). SL-Pos-RNTI may be any RNTI used for sidelink positioning, and its specific name and form are not particularly defined in the present disclosure.

In some embodiments, the first information field includes an SL PRS indication field, and a CRC of the first DCI is scrambled by a SL-Pos-RNTI.

For example, the SL PRS indication field may be a newly added information field dedicated to indicating SL PRS resource. The SL PRS indication field may include multiple bits (e.g., 3 bits), and the multiple bits are used to respectively indicate whether SL PRS transmission is included in each of at least one transmission.

The network device may use the SL-Pos-RNTI to scramble the CRC of the first DCI (including the SL PRS indication field), so that the terminal may determine the SL PRS resource based on the SL PRS indication field in the first DCI.

In some embodiments, when a CRC of the first DCI is scrambled by a SL-Pos-RNTI, the first DCI is used to indicate the SL PRS resource.

For example, the first DCI may be an existing DCI format 3_0, and the network device may scramble the CRC of the DCI through different RNTIs for different resource allocations. For example, the DCI format 3_0 with CRC scrambled by SL-Pos-RNTI is used only to indicate the allocation of SL PRS resource, and is not used to indicate the resource allocation of data transmission, that is, the time domain resource allocation field and the frequency domain resource allocation field in the DCI format 3_0 both indicate the SL PRS resource. The DCI format 3_0 with CRC scrambled by SL-RNTI or SL-CS-RNTI may be used to indicate the resource allocation of data transmission.

In some embodiments, the first DCI is associated with third DCI, and a PSSCH resource indicated by the third DCI and the SL PRS resource indicated by the first DCI are in the same slot.

For example, in the case where different resource allocations are indicated by scrambling the CRC of the DCI with different RNTIs, the first DCI only indicates the SL PRS resource, and the third DCI only indicates the PSSCH resource. The first DCI and the third DCI hat have an association relationship may indicate that the resources indicated by two DCIs are in the same slot.

In some embodiments, the association relationship between the first DCI and the third DCI is system-predefined or indicated by a network side.

In some embodiments, the second DCI includes a resource pool index field and/or a time interval field.

To be specific, the dedicated resource pool does not include PSSCH resource. In this case, the network device may use a new DCI (second DCI) to indicate the SL PRS resource. The terminal may determine the SL PRS resource in the dedicated resource pool according to the second DCI.

The second DCI at least includes a resource pool index field and/or a time interval field. The meanings of the resource pool index field and the time interval field are similar to those in DCI format 3_0, except that they are used to indicate different resources.

In some embodiments, the second DCI may further include other information fields to indicate more detailed SL PRS resource information. For example, the second DCI may include an indication of a slot where the SL PRS resource is located, or a symbol position of the SL PRS resource in the slot, or an SL PRS resource index, or a comb value of the SL PRS resource, etc.

In some embodiments, a size of the resource pool index field in the second DCI is the same as a size of a resource pool index field in the first DCI; and/or, a length of the second DCI is the same as a length of the first DCI. When the length of the second DCI is different from the length of the first DCI, the length of the second DCI may be padded to the same length as the first DCI through padding.

In some embodiments, a CRC of the second DCI is scrambled by a radio network temporary identifier for the dedicated resource pool and sidelink positioning (SL-Pos-DP-RNTI). SL-Pos-DP-RNTI may be any RNTI used for sidelink positioning and for indicating the SL PRS resource in the dedicated resource pool, and its specific name and form are not particularly defined in the present disclosure. When the terminal receives the DCI with CRC scrambled by SL-Pos-DP-RNTI, it may directly determine that the DCI indicates the SL PRS resource in the dedicated resource pool.

The present disclosure proposes a DCI design for use in the shared resource pool and/or the dedicated resource pool. Through such manners as introducing a new RNTI, setting special bit values, and introducing a new SL PRS indication field, it ensures compatibility with legacy terminals while enabling simultaneous indication of both SL communication and SL positioning resource allocations for the shared resource pool, and providing further indication of time-domain position information of the SL PRS resource for the dedicated resource pool. It can be applied to multiple SL positioning technologies.

FIG. 2 is a flow chart of a method for indicating SL PRS resource according to the embodiments of the present disclosure. The method may be applied to a network device (e.g., a base station). As shown in FIG. 2, the method includes the following steps.

Step 200, sending downlink control information (DCI) to a terminal, where the DCI is used to indicate an SL PRS resource allocated by the network device to the terminal.

In some embodiments, the DCI includes one or more of the following:
first DCI, used to indicate an SL PRS resource in a shared resource pool; or
second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a cyclic redundancy check (CRC) of the first DCI is scrambled by a radio network temporary identifier for sidelink positioning (SL-Pos-RNTI).

In some embodiments, a cyclic redundancy check (CRC) of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or,
a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

The methods in the various embodiments of the present disclosure are based on the same application concept, so reference may be made to each other for implementations of the methods, the repetition of which is not elaborated again herein.

The following provides illustrative examples of the method in the above embodiments of the present disclosure through specific application scenarios.

### Example 1

For a shared resource pool, DCI format 3_0 is used to indicate both SL data transmission resource allocation and SL PRS resource allocation. Specifically, for DCI format 3_0 with CRC scrambled by SL-RNTI, a configuration index field in DCI format 3_0 is used to indicate whether a corresponding transmission includes an SL PRS resource. The configuration index field includes 3 bits, and each bit indicates whether its corresponding one of up to 3 PSSCH transmissions includes SL PRS. The quantity of transmission is determined by a time domain resource allocation field in the DCI. For example, the time domain resource allocation field indicates 3 transmissions, and the configuration index field indicates "010", it means that the first and third transmissions include only data transmission (e.g., only PSSCH resource), and the second transmission includes both data transmission and SL PRS transmission. In a case that the resource allocation field indicates 2 transmissions, only the first 2 bits in the configuration index field are valid. In a case that the configuration index field indicates "101", it means that the first transmission includes both data transmission and SL PRS transmission, and the second transmission includes only data transmission. In this solution, it is required that the configuration index field always exists in the DCI format 3_0 with CRC scrambled by SL-RNTI.

For DCI format 3_0 with CRC scrambled by SL-CS-RNTI, a HARQ process number field in DCI format 3_0 is used to indicate whether a corresponding transmission includes an SL PRS resource. The HARQ process number field occupies 4 bits, and uses values other than "0000" and "1111" to respectively indicate whether each of the corresponding transmissions includes an SL PRS resource (because "0000" indicates activating a configured grant, and "1111" indicates de activating the configured grant). In one manner, the first bit with a value 0 is used to indicate activating a configured grant, and each of the latter 3 bits indicates whether its corresponding one of up to 3 PSSCH transmissions includes SL PRS, as shown in Table 2.

FIG. 3 is an example diagram of resource indication according to the embodiments of the present disclosure. As shown in FIG. 3, after receiving the DCI format 3_0, the terminal determines a slot where the SL PSSCH resource is located according to the time domain resource allocation field and the frequency domain resource allocation field in the DCI, and determines whether there is an SL PRS resource in the corresponding slot according to the indication of the configuration index field. Further, the terminal indicates the PSCCH resource and SL PRS resource allocated by the base station to another terminal through SCI format 1-A.

In this example, the SL PRS resource allocation is indicated by setting special values in the existing fields of the DCI, which neither increases the quantity of blind detections of the terminal nor increases the DCI overhead.

### Example 2

A new RNTI is introduced, which may be defined as SL-Pos-RNTI. For a shared resource pool, in a case that a base station configures the SL-Pos-RNTI through RRC, the DCI format 3_0 with CRC scrambled by this SL-Pos-RNTI includes an SL PRS indication field. This SL PRS indication field may be one newly added field in the existing DCI format 3_0. The SL PRS indication field includes 3 bits, and each bit indicates whether its corresponding one of up to 3 PSSCH transmissions includes SL PRS. The quantity of transmission is determined by a time domain resource allocation field in the DCI. For example, the time domain resource allocation field indicates 3 transmissions, and the SL PRS indication field indicates "010", it means that the first and third transmissions include only data transmission, and the second transmission includes both data transmission and SL PRS transmission. In a case that the resource allocation field indicates 2 transmissions, only the first 2 bits in the SL PRS indication field are valid. In a case that the SL PRS indication field indicates "101", it means that the first transmission includes both data transmission and SL PRS transmission, and the second transmission includes only data transmission.

After receiving the DCI format 3_0, the terminal determines a slot where the SL PSSCH resource is located according to the time domain resource allocation field and the frequency domain resource allocation field in the DCI, and determines whether there is an SL PRS resource in the corresponding slot according to the indication of the SL PRS indication field. Further, the terminal indicates the PSCCH resource and SL PRS resource allocated by the base station to another terminal through SCI format 1-A.

In a case that the base station configures the SL-Pos-RNTI through RRC, the SL PRS indication field in the DCI format 3_0 with CRC scrambled by SL-CS-RNTI is reserved (i.e., bits are invalid). This DCI is used for activating or releasing an SL configured grant, consistent with its existing function. In a case that the base station configures the SL-Pos-RNTI through RRC, the SL PRS indication field in the DCI format 3_0 with CRC scrambled by SL-RNTI is reserved (i.e., bits are invalid). This DCI is used for dynamic scheduling resource allocation of SL communication, consistent with its existing function.

In this example, the DCI format 3_0 with CRC scrambled by SL-Pos-RNTI is used to indicate both the resource allocation of PSSCH for SL communication and the resource allocation of SL PRS for SL positioning.

### Example 3

A new RNTI is introduced, which may be defined as SL-Pos-RNTI. For a shared resource pool, DCI format 3_0 with CRC scrambled by different RNTIs is used for different resource allocations. DCI format 3_0 with CRC scrambled by this SL-Pos-RNTI is used to indicate SL PRS resource allocation. Under this condition, the time domain resource allocation and frequency domain resource allocation in Table 1 correspond to time domain and frequency domain positions of an SL PRS resource. When the terminal receives this DCI format 3_0, it determines a slot where the SL PRS resource is located according to the time domain resource allocation field and frequency domain resource allocation field in the DCI. DCI format 3_0 with CRC scrambled by SL-RNTI is used to indicate SL PSSCH resource allocation. When the terminal receives this DCI format 3_0, it determines a slot where a PSSCH resource is located according to the time domain resource allocation field and frequency domain resource allocation field in the DCI. Further, the terminal indicates the PSSCH resource and SL PRS resource allocated by the base station to another terminal through SCI format 1-A.

Optionally, it is system-predefined or indicated that there is an association relationship between the two DCIs (DCI format 3_0 with CRC scrambled by SL-Pos-RNTI and DCI format 3_0 with CRC scrambled by SL-RNTI) to ensure that the terminal determines that the PSSCH resource and SL PRS resource are located in the same slot.

Similarly, DCI format 3_0 with CRC scrambled by SL-CS-RNTI is used to indicate SL PSSCH resource allocation. Upon receiving this DCI, the terminal, in conjunction with the indication of DCI format 3_0 with CRC scrambled by SL-Pos-RNTI, determines the slot where the SL PSSCH resource and SL PRS resource is located. Further, the terminal indicates the PSSCH resource and SL PRS resource allocated by the base station to another terminal through SCI format 1-A.

### Example 4

The resource allocation may be indicated by using the combination of the above multiple examples. For example, Example 1 is combined with Example 3, and the DCI is scrambled by introducing SL-Pos-RNTI, and the SL PRS resource allocation is realized by setting special values in the DCI fields in Example 1. Please refer to the above examples for details, which will not be elaborated again herein.

### Example 5

A dedicated resource pool does not include a PSSCH resource. In this case, the base station does not need to indicate the PSSCH resource, but only needs to indicate an SL PRS resource. At this point, a new DCI may be used to indicate the SL PRS resource, assuming it is defined as DCI format 3_2. This DCI at least includes a resource pool index field and a time interval field. A size of the resource pool index field is the same as that in DCI format 3_0, and a length of this DCI is the same as that of DCI format 3_0. If their lengths differ, the length of this DCI is padded to the length of DCI format 3_0 through padding. This DCI further includes an indication of a slot where the SL PRS resource is located, and may further include a symbol position of the SL PRS resource in the slot, or an SL PRS resource index, or a comb value of the SL PRS resource.

When the terminal receives the DCI with CRC scrambled by SL-RNTI, it determines a resource pool scheduled by this DCI by parsing the resource pool index field of this DCI. In a case that this index indicates a dedicated resource pool, the terminal determines that this DCI is DCI format 3-2. The terminal further parses such information as the slot where the SL PRS resource is located, the symbol position of the SL PRS resource in the slot, or the SL PRS resource index. After the terminal determines the SL PRS resource, it indicates the SL PRS resource allocated by the base station to another terminal through the SCI.

### Example 6

A new RNTI, which may be defined as SL-Pos-DP-RNTI, is introduced for scrambling the DCI of the dedicated resource pool. When the terminal receives the DCI with CRC scrambled by SL-Pos-DP-RNTI, the terminal determines that this DCI is used for SL PRS resource allocation of the dedicated resource pool. This DCI may include a resource pool index field and a time interval field. When only one dedicated resource pool is configured, the resource pool index field is 0 bit.

In this DCI, a size of the resource pool index field is the same as that in DCI format 3_0, and a length of this DCI is the same as that of DCI format 3_0. If their lengths differ, the length of this DCI is padded to the length of DCI format 3_0 through padding. This DCI further includes an indication of a slot where the SL PRS resource is located, and may further include a symbol position of the SL PRS resource in the slot, or an SL PRS resource index, or a comb value of the SL PRS resource.

When the terminal receives the DCI with CRC scrambled by SL-Pos-DP-RNTI, the terminal determines that this DCI is used for SL PRS resource allocation in the dedicated resource pool. The terminal further parses such information as the slot where the SL PRS resource is located, the symbol position of the SL PRS resource in the slot, or the SL PRS resource index. After the terminal determines the SL PRS resource, it indicates the SL PRS resource allocated by the base station to another terminal through SCI.

The methods and apparatuses in the various embodiments of the present disclosure are based on the same application concept. Since the principles of solving problems in the methods and the apparatus are similar, reference may be made to each other for implementations of the apparatus and the methods, the repetition of which is not elaborated again herein.

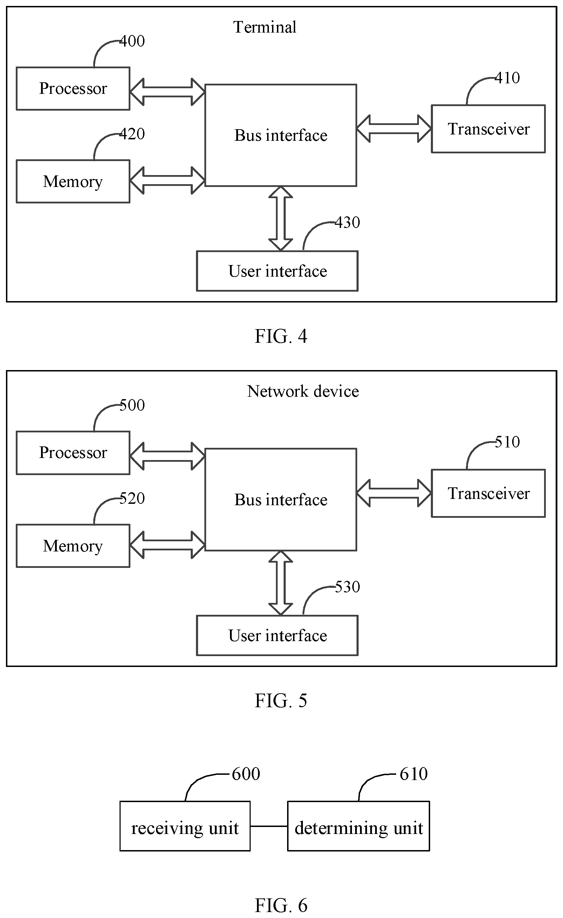

FIG. 4 is a schematic structural diagram of a terminal according to the embodiments of the present disclosure, as shown in FIG. 4, the terminal includes a memory 420, a transceiver 410 and a processor 400. The processor 400 and the memory 720 may be physically arranged separately.

The memory 420 is configured to store a computer program. The transceiver 410 is configured to transmit and receive data under the control of the processor 400.

In specific, the transceiver 410 is used to receive and transmit data under the control of the processor 400.

In FIG. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. The transmission media include a wireless channel, a wired channel, an optical cable, or other transmission media. For different user equipments, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

The processor 400 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor 400 may adopt a multi-core architecture.

The processor 410 is configured to execute any of the methods in the embodiments of the present disclosure according to obtained executable instructions by calling the program instructions stored in the memory 420, e.g., receiving downlink control information (DCI) sent by a network device; and determining, based on the DCI, an SL PRS resource allocated by the network device to the terminal.

In some embodiments, the DCI includes one or more of the following:
first DCI, used to indicate an SL PRS resource in a shared resource pool; or
second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a cyclic redundancy check (CRC) of the first DCI is scrambled by a radio network temporary identifier for sidelink positioning (SL-Pos-RNTI).

In some embodiments, when a cyclic redundancy check (CRC) of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or,
a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

FIG. 5 is a schematic structural diagram of a network device according to the embodiments of the present disclosure, as shown in FIG. 5, the network device includes a memory 520, a transceiver 510 and a processor 500. The processor 500 and the memory 520 may be physically arranged separately.

The memory 520 is configured to store a computer program. The transceiver 510 is configured to transmit and receive data under the control of the processor 500.

In specific, the transceiver 510 is used to receive and transmit data under the control of the processor 500.

In FIG. 5, a bus architecture may include any quantity of interconnected buses and bridges. Various circuits including one or more processors represented by the processor 500 and a memory represented by the memory 520 are linked. The bus architecture may further link various other circuits together, such as a periphery component, a voltage stabilizer and a power management circuit, which are known in the art and are not further described herein. A bus interface provides an interface. The transceiver 510 may be multiple elements, i.e., including a transmitter and a receiver, providing a unit for communicating with various other devices on transmission media. The transmission media include a wireless channel, a wired channel, an optical cable, or other transmission media.

The processor 500 is in charge of managing the bus architecture and common processes. The memory 520 may store data used by the processor 500 in performing operations.

The processor 500 may be a CPU, ASIC, FPGA, or CPLD, or the processor 500 may adopt a multi-core architecture.

The processor 510 is configured to execute any of methods in the embodiments of the present disclosure according to obtained executable instructions by calling the program instructions stored in the memory 520, e.g., sending downlink control information (DCI) to a terminal, where the DCI is used to indicate an SL PRS resource allocated by the network device to the terminal.

In some embodiments, the DCI includes one or more of the following:
first DCI, used to indicate an SL PRS resource in a shared resource pool; or
second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a cyclic redundancy check (CRC) of the first DCI is scrambled by a radio network temporary identifier for sidelink positioning (SL-Pos-RNTI).

In some embodiments, a cyclic redundancy check (CRC) of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or,
a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

It should be noted that the above terminal and network device in the embodiments of the present disclosure are capable of implementing all method steps implemented in the above method embodiments, and are capable of achieving the same technical effects. Therefore, the description and beneficial effects of these embodiments that are the same as those of the method embodiments, which will not be elaborated again herein.

FIG. 6 is a schematic structural diagram of an apparatus for determining SL PRS resource according to the embodiments of the present disclosure, as shown in FIG. 6, the apparatus includes:
a receiving unit 600, configured to receive downlink control information (DCI) sent by a network device; and
a determining unit 610, configured to determine, based on the DCI, an SL PRS resource allocated by the network device to the terminal.

In some embodiments, the DCI includes one or more of the following:
first DCI, used to indicate an SL PRS resource in a shared resource pool; or
second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a cyclic redundancy check (CRC) of the first DCI is scrambled by a radio network temporary identifier for sidelink positioning (SL-Pos-RNTI).

In some embodiments, when a cyclic redundancy check (CRC) of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or,
a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

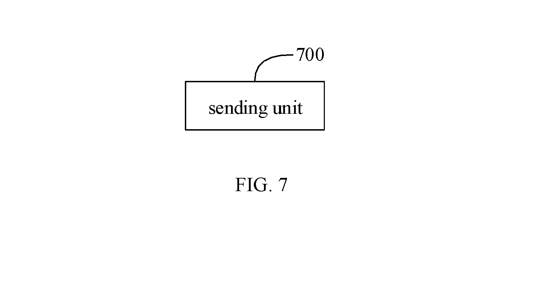

FIG. 7 is a schematic structural diagram of a sidelink positioning reference signal SL PRS resource indication apparatus according to the embodiments of the present disclosure, as shown in FIG. 7, the apparatus includes:
a sending unit 700, configured to transmit downlink control information (DCI) to a terminal, where the DCI is used to indicate an SL PRS resource allocated by the network device to the terminal.

In some embodiments, the DCI includes one or more of the following:
first DCI, used to indicate an SL PRS resource in a shared resource pool; or
second DCI, used to indicate an SL PRS resource in a dedicated resource pool.

In some embodiments, the first DCI includes a first information field, and the first information field is used to indicate whether there is an SL PRS resource in a slot where at least one physical sidelink shared channel (PSSCH) transmission is located.

In some embodiments, the first information field includes a configuration index field and/or a hybrid automatic repeat request HARQ process number field.

In some embodiments, 3 bits in the configuration index field are used to respectively indicate whether there is an SL PRS resource in the slot where each of up to 3 PSSCH transmissions is located.

In some embodiments, 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

In some embodiments, a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

In some embodiments, the first information field includes an SL PRS indication field, and a cyclic redundancy check (CRC) of the first DCI is scrambled by a radio network temporary identifier for sidelink positioning (SL-Pos-RNTI).

In some embodiments, when a cyclic redundancy check (CRC) of the first DCI is scrambled by a radio network temporary identifier for sidelink positioning (SL-Pos-RNTI), the first DCI is used to indicate the SL PRS resource.

In some embodiments, the first DCI is associated with third DCI, and a physical sidelink shared channel (PSSCH) resource indicated by the third DCI and the SL PRS resource indicated by the first DCI are in the same slot.

In some embodiments, an association relationship between the first DCI and the third DCI is system-predefined or indicated by a network side.

In some embodiments, the second DCI includes a resource pool index field and/or a time interval field.

In some embodiments, a size of the resource pool index field in the second DCI is the same as a size of a resource pool index field in the first DCI; and/or,
a length of the second DCI is the same as a length of the first DCI.

In some embodiments, a cyclic redundancy check (CRC) of the second DCI is scrambled by a radio network temporary identifier for the dedicated resource pool and sidelink positioning (SL-Pos-DP-RNTI).

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the prior art, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It should be noted that the above apparatuses in the embodiments of the present disclosure are capable of implementing all method steps implemented in the above method embodiments, and are capable of achieving the same technical effects. The description and beneficial effects of these embodiments that are the same as those of the method embodiments, which will not be elaborated again herein.

In another aspect, the embodiments of the present disclosure further provide a non-transitory readable storage medium, the non-transitory readable storage medium stores a computer program, and the computer program is configured to cause a processor to perform the methods in the above-mentioned embodiments.

It should be noted that the non-transitory readable storage medium in the embodiments of the present disclosure is capable of implementing all method steps implemented in the above method embodiments, and is capable of achieving the same technical effects. The description and beneficial effects of these embodiments that are the same as those of the method embodiments, which will not be elaborated again herein.

The non-transitory readable storage medium may be any available medium or data storage device that a computer may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal device may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminal devices through one or more sectors on air interfaces, or may have other names. The network device may be configured to exchange received air frames and Internet protocol (Internet Protocol, IP) packets, serving as a router between the wireless terminal devices and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. As can be appreciated, each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for determining sidelink positioning reference signal (SL PRS) resource, applied to a terminal, comprising:
receiving downlink control information (DCI) sent by a network device; and
determining, based on the DCI, an SL PRS resource allocated by the network device to the terminal.

2. The method for determining SL PRS resource according to claim 1, wherein the DCI comprises one or more of the following:
first DCI, used to indicate an SL PRS resource in a shared resource pool; or
second DCI, used to indicate an SL PRS resource in a dedicated resource pool.

3. The method for determining SL PRS resource according to claim 2, wherein the first DCI comprises a first information field, and the first information field is used to indicate whether there is an SL PRS resource in a slot where at least one physical sidelink shared channel (PSSCH) transmission is located.

4. The method for determining SL PRS resource according to claim 3, wherein the first information field comprises a configuration index field and/or a hybrid automatic repeat request HARQ process number field.

5. The method for determining SL PRS resource according to claim 4, wherein 3 bits in the configuration index field are used to respectively indicate whether there is an SL PRS resource in the slot where each of up to 3 PSSCH transmissions is located.

6. The method for determining SL PRS resource according to claim 4, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

7. The method for determining SL PRS resource according to any one of claims 4 to 6, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

8. The method for determining SL PRS resource according to claim 3, wherein the first information field comprises an SL PRS indication field, and a CRC of the first DCI is scrambled by a SL-Pos-RNTI.

9. The method for determining SL PRS resource according to claim 2, wherein, when a CRC of the first DCI is scrambled by a SL-Pos-RNTI, the first DCI is used to indicate the SL PRS resource.

10. The method for determining SL PRS resource according to claim 9, wherein the first DCI is associated with third DCI, and a physical sidelink shared channel (PSSCH) resource indicated by the third DCI and the SL PRS resource indicated by the first DCI are in the same slot.

11. The method for determining SL PRS resource according to claim 10, wherein an association relationship between the first DCI and the third DCI is system-predefined or indicated by a network side.

12. The method for determining SL PRS resource according to claim 2, wherein the second DCI comprises a resource pool index field and/or a time interval field.

13. The method for determining SL PRS resource according to claim 12, wherein a size of the resource pool index field in the second DCI is the same as a size of a resource pool index field in the first DCI; and/or,
a length of the second DCI is the same as a length of the first DCI.

14. The method for determining SL PRS resource according to claim 12 or 13, wherein a CRC of the second DCI is scrambled by a radio network temporary identifier for the dedicated resource pool and sidelink positioning (SL-Pos-DP-RNTI).

15. A method for indicating sidelink positioning reference signal (SL PRS) resource, applied to a network device, comprising:
sending downlink control information (DCI) to a terminal, wherein the DCI is used to indicate an SL PRS resource allocated by the network device to the terminal.

16. The method for indicating SL PRS resource according to claim 15, wherein the DCI comprises one or more of the following:
first DCI, used to indicate an SL PRS resource in a shared resource pool; or
second DCI, used to indicate an SL PRS resource in a dedicated resource pool.

17. The method for indicating SL PRS resource according to claim 16, wherein the first DCI comprises a first information field, and the first information field is used to indicate whether there is an SL PRS resource in a slot where at least one physical sidelink shared channel (PSSCH) transmission is located.

18. The method for indicating SL PRS resource according to claim 17, wherein the first information field comprises a configuration index field and/or a hybrid automatic repeat request HARQ process number field.

19. The method for indicating SL PRS resource according to claim 18, wherein 3 bits in the configuration index field are used to respectively indicate whether there is an SL PRS resource in the slot where each of up to 3 PSSCH transmissions is located.

20. The method for indicating SL PRS resource according to claim 18, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

21. The method for indicating SL PRS resource according to any one of claims 18 to 20, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

22. The method for indicating SL PRS resource according to claim 17, wherein the first information field comprises an SL PRS indication field, and a CRC of the first DCI is scrambled by a SL-Pos-RNTI.

23. The method for indicating SL PRS resource according to claim 16, wherein, when a CRC of the first DCI is scrambled by a SL-Pos-RNTI, the first DCI is used to indicate the SL PRS resource.

24. The method for indicating SL PRS resource according to claim 23, wherein the first DCI is associated with third DCI, and a physical sidelink shared channel (PSSCH) resource indicated by the third DCI and the SL PRS resource indicated by the first DCI are in the same slot.

25. The method for indicating SL PRS resource according to claim 24, wherein an association relationship between the first DCI and the third DCI is system-predefined or indicated by a network side.

26. The method for indicating SL PRS resource according to claim 16, wherein the second DCI comprises a resource pool index field and/or a time interval field.

27. The method for indicating SL PRS resource according to claim 26, wherein a size of the resource pool index field in the second DCI is the same as a size of a resource pool index field in the first DCI; and/or,
a length of the second DCI is the same as a length of the first DCI.

28. The method for indicating SL PRS resource according to claim 26 or 27, wherein a CRC of the second DCI is scrambled by a radio network temporary identifier for the dedicated resource pool and sidelink positioning (SL-Pos-DP-RNTI).

29. A terminal, comprising: a memory, a transceiver and a processor, wherein,
the memory is configured to store a computer program;
the transceiver is configured to transmit and receive data under the control of the processor;
the processor is configured to read the computer program in the memory to perform the following operations:
receiving downlink control information (DCI) sent by a network device; and
determining, based on the DCI, a sidelink positioning reference signal (SL PRS) resource allocated by the network device to the terminal.

30. The terminal according to claim 29, wherein the DCI comprises one or more of the following:
first DCI, used to indicate an SL PRS resource in a shared resource pool; or
second DCI, used to indicate an SL PRS resource in a dedicated resource pool.

31. The terminal according to claim 30, wherein the first DCI comprises a first information field, and the first information field is used to indicate whether there is an SL PRS resource in a slot where at least one physical sidelink shared channel (PSSCH) transmission is located.

32. The terminal according to claim 31, wherein the first information field comprises a configuration index field and/or a hybrid automatic repeat request HARQ process number field.

33. The terminal according to claim 32, wherein 3 bits in the configuration index field are used to respectively indicate whether there is an SL PRS resource in the slot where each of up to 3 PSSCH transmissions is located.

34. The terminal according to claim 32, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

35. The terminal according to any one of claims 32 to 34, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

36. The terminal according to claim 31, wherein the first information field comprises an SL PRS indication field, and a CRC of the first DCI is scrambled by a SL-Pos-RNTI.

37. The terminal according to claim 30, wherein, when a CRC of the first DCI is scrambled by a SL-Pos-RNTI, the first DCI is used to indicate the SL PRS resource.

38. The terminal method according to claim 37, wherein the first DCI is associated with third DCI, and a physical sidelink shared channel (PSSCH) resource indicated by the third DCI and the SL PRS resource indicated by the first DCI are in the same slot.

39. The terminal according to claim 38, wherein an association relationship between the first DCI and the third DCI is system-predefined or indicated by a network side.

40. The terminal according to claim 30, wherein the second DCI comprises a resource pool index field and/or a time interval field.

41. The terminal according to claim 40, wherein a size of the resource pool index field in the second DCI is the same as a size of a resource pool index field in the first DCI; and/or,
a length of the second DCI is the same as a length of the first DCI.

42. The terminal according to claim 40 or 41, wherein a CRC of the second DCI is scrambled by a radio network temporary identifier for the dedicated resource pool and sidelink positioning (SL-Pos-DP-RNTI).

43. A network device, comprising: a memory, a transceiver and a processor, wherein,
the memory is configured to store a computer program;
the transceiver is configured to transmit and receive data under the control of the processor;
the processor is configured to read the computer program in the memory to perform the following operations:
sending downlink control information (DCI) to a terminal, wherein the DCI is used to indicate a sidelink positioning reference signal SL PRS resource allocated by the network device to the terminal.

44. The network device according to claim 43, wherein the DCI comprises one or more of the following:
first DCI, used to indicate an SL PRS resource in a shared resource pool; or
second DCI, used to indicate an SL PRS resource in a dedicated resource pool.

45. The network device according to claim 44, wherein the first DCI comprises a first information field, and the first information field is used to indicate whether there is an SL PRS resource in a slot where at least one physical sidelink shared channel (PSSCH) transmission is located.

46. The network device according to claim 45, wherein the first information field comprises a configuration index field and/or a hybrid automatic repeat request HARQ process number field.

47. The network device according to claim 46, wherein 3 bits in the configuration index field are used to respectively indicate whether there is an SL PRS resource in the slot where each of up to 3 PSSCH transmissions is located.

48. The network device according to claim 46, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

49. The network device according to any one of claims 46 to 48, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

50. The network device according to claim 45, wherein the first information field comprises an SL PRS indication field, and a CRC of the first DCI is scrambled by a SL-Pos-RNTI.

51. The network device according to claim 44, wherein, when a CRC of the first DCI is scrambled by a SL-Pos-RNTI, the first DCI is used to indicate the SL PRS resource.

52. The network device according to claim 51, wherein the first DCI is associated with third DCI, and a physical sidelink shared channel (PSSCH) resource indicated by the third DCI and the SL PRS resource indicated by the first DCI are in the same slot.

53. The network device according to claim 52, wherein an association relationship between the first DCI and the third DCI is system-predefined or indicated by a network side.

54. The network device according to claim 44, wherein the second DCI comprises a resource pool index field and/or a time interval field.

55. The network device according to claim 54, wherein a size of the resource pool index field in the second DCI is the same as a size of a resource pool index field in the first DCI; and/or,
a length of the second DCI is the same as a length of the first DCI.

56. The network device according to claim 54 or 55, wherein a CRC of the second DCI is scrambled by a radio network temporary identifier for the dedicated resource pool and sidelink positioning (SL-Pos-DP-RNTI).

57. An apparatus for determining sidelink positioning reference signal (SL PRS) resource, comprising:
a receiving unit, configured to receive downlink control information (DCI) sent by a network device; and
a determining unit, configured to determine, based on the DCI, an SL PRS resource allocated by the network device to the terminal.

58. The apparatus for determining SL PRS resource according to claim 57, wherein the DCI comprises one or more of the following:
first DCI, used to indicate an SL PRS resource in a shared resource pool; or
second DCI, used to indicate an SL PRS resource in a dedicated resource pool.

59. The apparatus for determining SL PRS resource according to claim 58, wherein the first DCI comprises a first information field, and the first information field is used to indicate whether there is an SL PRS resource in a slot where at least one physical sidelink shared channel (PSSCH) transmission is located.

60. The apparatus for determining SL PRS resource according to claim 59, wherein the first information field comprises a configuration index field and/or a hybrid automatic repeat request HARQ process number field.

61. The apparatus for determining SL PRS resource according to claim 60, wherein 3 bits in the configuration index field are used to respectively indicate whether there is an SL PRS resource in the slot where each of up to 3 PSSCH transmissions is located.

62. The apparatus for determining SL PRS resource according to claim 60, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

63. The apparatus for determining SL PRS resource according to any one of claims 60 to 62, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

64. The apparatus for determining SL PRS resource according to claim 59, wherein the first information field comprises an SL PRS indication field, and a CRC of the first DCI is scrambled by a SL-Pos-RNTI.

65. The apparatus for determining SL PRS resource according to claim 58, wherein, when a cyclic redundancy check (CRC) of the first DCI is scrambled by a SL-Pos-RNTI, the first DCI is used to indicate the SL PRS resource.

66. The apparatus for determining SL PRS resource according to claim 65, wherein the first DCI is associated with third DCI, and a physical sidelink shared channel (PSSCH) resource indicated by the third DCI and the SL PRS resource indicated by the first DCI are in the same slot.

67. The apparatus for determining SL PRS resource according to claim 66, wherein an association relationship between the first DCI and the third DCI is system-predefined or indicated by a network side.

68. The apparatus for determining SL PRS resource according to claim 58, wherein the second DCI comprises a resource pool index field and/or a time interval field.

69. The apparatus for determining SL PRS resource according to claim 68, wherein a size of the resource pool index field in the second DCI is the same as a size of a resource pool index field in the first DCI; and/or,
a length of the second DCI is the same as a length of the first DCI.

70. The apparatus for determining SL PRS resource according to claim 68 or 69, wherein a CRC of the second DCI is scrambled by a radio network temporary identifier for the dedicated resource pool and sidelink positioning (SL-Pos-DP-RNTI).

71. An apparatus for indicating sidelink positioning reference signal (SL PRS) resource, comprising:
a sending unit, configured to send downlink control information (DCI) to a terminal, wherein the DCI is used to indicate an SL PRS resource allocated by the network device to the terminal.

72. The apparatus for indicating SL PRS resource according to claim 71, wherein the DCI comprises one or more of the following:
first DCI, used to indicate an SL PRS resource in a shared resource pool; or
second DCI, used to indicate an SL PRS resource in a dedicated resource pool.

73. The apparatus for indicating SL PRS resource according to claim 72, wherein the first DCI comprises a first information field, and the first information field is used to indicate whether there is an SL PRS resource in a slot where at least one physical sidelink shared channel (PSSCH) transmission is located.

74. The apparatus for indicating SL PRS resource according to claim 73, wherein the first information field comprises a configuration index field and/or a hybrid automatic repeat request HARQ process number field.

75. The apparatus for indicating SL PRS resource according to claim 74, wherein 3 bits in the configuration index field are used to respectively indicate whether there is an SL PRS resource in the slot where each of up to 3 PSSCH transmissions is located.

76. The apparatus for indicating SL PRS resource according to claim 74, wherein 1 bit in the HARQ process number field is used to indicate activating a configured grant, and the other 3 bits other than the 1 bit in the HARQ process number field are used to respectively indicate whether there is an SL PRS resource in the slot where each of up to 3 PSSCH transmissions is located.

77. The apparatus for indicating SL PRS resource according to any one of claims 74 to 76, wherein a cyclic redundancy check (CRC) of the first DCI is scrambled by a sidelink radio network temporary identifier (SL-RNTI), a sidelink configured scheduling radio network temporary identifier (SL-CS-RNTI), or a radio network temporary identifier for sidelink positioning (SL-Pos-RNTI).

78. The apparatus for indicating SL PRS resource according to claim 73, wherein the first information field comprises an SL PRS indication field, and a CRC of the first DCI is scrambled by a SL-Pos-RNTI.

79. The apparatus for indicating SL PRS resource according to claim 72, wherein, when a CRC of the first DCI is scrambled by a SL-Pos-RNTI, the first DCI is used to indicate the SL PRS resource.

80. The apparatus for indicating SL PRS resource according to claim 79, wherein the first DCI is associated with third DCI, and a physical sidelink shared channel (PSSCH) resource indicated by the third DCI and the SL PRS resource indicated by the first DCI are in the same slot.

81. The apparatus for indicating SL PRS resource according to claim 80, wherein an association relationship between the first DCI and the third DCI is system-predefined or indicated by a network side.

82. The apparatus for indicating SL PRS resource according to claim 72, wherein the second DCI comprises a resource pool index field and/or a time interval field.

83. The apparatus for indicating SL PRS resource according to claim 82, wherein a size of the resource pool index field in the second DCI is the same as a size of a resource pool index field in the first DCI; and/or,
a length of the second DCI is the same as a length of the first DCI.

84. The apparatus for indicating SL PRS resource according to claim 82 or 83, wherein a CRC of the second DCI is scrambled by a radio network temporary identifier for the dedicated resource pool and sidelink positioning (SL-Pos-DP-RNTI).

85. A non-transitory readable storage medium, wherein the non-transitory readable storage medium stores a computer program, and the computer program is configured to cause a processor to perform the method according to any one of claims 1 to 14.

86. A non-transitory readable storage medium, wherein the non-transitory readable storage medium stores a computer program, and the computer program is configured to cause a processor to perform the method according to any one of claims 15 to 28.
